# FASCICULE DE BREVET EUROPEEN

(11) **EP 1 274 609 B1**
(45) Date de publication et mention de la délivrance du brevet: **18.01.2006**
(21) Numéro de dépôt: 01925647.8
(22) Date de dépôt: 13.04.2001
(51) Int. Cl.: B60R 21/01

(54) **DISPOSITIF ET PROCEDE POUR DECLENCHER VOLONTAIREMENT LE DEPLOIEMENT D'UN COUSSIN D'AIR DANS UN VEHICULE AUTOMOBILE**
VORRICHTUNG UND VERFAHREN ZUR GEZIELTEN AUSLÖSUNG EINES AIRBAGS IN KRAFTFAHRZEUGEN
DEVICE AND METHOD FOR DELIBERATELY TRIGGERING IN PARTICULAR DEPLOYMENT OF SAFETY EQUIPMENT ITEMS SUCH AS AN AIRBAG IN A MOTOR VEHICLE

(30) Priorité: 19.04.2000 FR 0005047
(43) Date de publication de la demande: 15.01.2003
(73) Titulaire: Renault s.a.s., 92100 Boulogne Billancourt (FR)
(72) Inventeur: FERREIRA, Joachim, F-95800 Cergy (FR); TISSEUIL, Pascal, F-92160 Antony (FR)
(86) Numéro de dépôt international: PCT/FR2001/001149
(87) Numéro de publication internationale: WO 2001/079038

(56) Documents cités:
- EP-A- 0 919 782
- DE-A- 19 821 784
- "TECHNIQUE FOR AUTOMOTIVE AIR BAG DISPOSAL" RESEARCH DISCLOSURE,GB,INDUSTRIAL OPPORTUNITIES LTD. HAVANT, no. 406, 1 février 1998 (1998-02-01), page 130 XP000772306 ISSN: 0374-4353

## Description

La présente invention se rapporte notamment à un calculateur pour commander la mise à feu d'organes pyrotechniques notamment destinés à déployer des équipements de sécurité dans un véhicule automobile, et à un procédé pour déclencher volontairement cette mise à feu. Un dispositif selon la préambule de la revendication 1 est connu du document "Technique for Automotive Air Bag Disposal"; Research Disclosure, 68, Industrial Opportunities Ltcl. Havant, N° 406, 01.02.1998, page 130 (XP 000 772 306).

La plupart des véhicules automobiles actuels sont équipés d'équipements de sécurité susceptibles de se déployer en cas d'accident sous l'action d'organes pyrotechniques.

Ces équipements de sécurité comprennent notamment les pré-tensionneurs de ceintures de sécurité, les coussins (« AirBag® ») et rideaux à enveloppe gonflable, etc.

Dans certaines situations, il importe de pouvoir déclencher volontairement la mise à feu des organes pyrotechniques.

C'est le cas notamment lorsqu'un véhicule atteint la fin de son cycle de vie et qu'il doit être démonté puis recyclé.

Dans ce cas en effet, il importe de pouvoir neutraliser tous les organes pyrotechniques de manière à éviter toute mise à feu intempestive susceptible de blesser les opérateurs intervenant sur ou à proximité du véhicule.

Classiquement, on réalise cette neutralisation en branchant sur un connecteur situé sur le calculateur de commande des organes pyrotechniques un boîtier électronique permettant d'engendrer des signaux analogues à ceux que reçoit le calculateur en cas d'accident, entraînant ainsi la mise à feu des organes pyrotechniques dans l'ordre prévu par le constructeur.

Bien que cette technique soit relativement efficace, elle présente comme principaux inconvénients de nécessiter le recours à des outils de mise à feu complexes et coûteux et de nécessiter l'installation de circuits supplémentaires dans le calculateur.

En outre, l'accès au connecteur situé sur le calculateur est souvent compliqué, ce qui a pour effet d'allonger la durée des opérations de recyclage, et ainsi de grever le coût de ces opérations.

La présente invention a pour but de remédier à ces inconvénients. On atteint ce but de l'invention avec un calculateur susceptible d'émettre, à la réception d'au moins un signal d'entrée prédéfini, au moins un signal de sortie destiné à déclencher la mise à feu d'au moins un organe pyrotechnique équipant un véhicule automobile, comprenant des bornes destinées à recevoir une tension d'alimentation, remarquable en ce qu'il comprend en outre des moyens susceptibles d'identifier une séquence d'évolution temporelle prédéterminée de ladite tension d'alimentation, et de provoquer l'émission dudit signal de sortie consécutivement à ladite identification.

Grâce à ces caractéristiques, il suffit de faire varier de manière particulière la tension dans le circuit d'alimentation du calculateur pour que ce dernier engendre ensuite de manière autonome le signal de sortie permettant de déclencher la mise à feu des organes pyrotechniques.

On peut de la sorte s'affranchir de l'utilisation de tout outil complexe du type permettant d'engendrer des signaux analogues à ceux que reçoit le calculateur en cas d'accident, on peut simplifier au maximum la conception de ce calculateur, et on peut éviter tout branchement compliqué sur un connecteur situé sur ce calculateur. Suivant d'autres caractéristiques de ce calculateur :
- ledit signal de sortie est adapté pour déclencher la mise à feu d'une pluralité d'organes pyrotechniques,
- ledit signal de sortie est adapté pour déclencher ladite mise à feu selon un ordonnancement prédéfini,
- lesdits moyens comprennent au moins une unité électronique telle qu'un microprocesseur programmée de manière à provoquer l'émission dudit signal de sortie après avoir identifié ladite séquence,
- ledit microprocesseur est relié auxdites bornes d'alimentation par l'intermédiaire d'un régulateur de tension et d'un diviseur de tension.

La présente invention a également pour objet une source de tension variable destinée à être branchée aux bornes d'alimentation dudit calculateur, remarquable en ce qu'elle comprend un générateur de tension et des moyens pour engendrer ladite séquence prédéterminée à la demande à partir de la tension fournie par ledit générateur.

Suivant d'autres caractéristiques de cette source de tension variable :
- lesdits moyens comprennent une unité électronique telle qu'un microprocesseur programmée de manière à engendrer automatiquement ladite séquence prédéterminée,
- lesdits moyens sont adaptés pour engendrer manuellement ladite séquence prédéterminée,
- ledit générateur de tension est distinct d'une batterie de véhicule automobile,
- ledit générateur de tension comprend une batterie de véhicule automobile.

La présente invention a également pour objet un véhicule automobile, remarquable en ce qu'il est équipé d'un ensemble conforme à ce qui précède.

La présente invention a également pour objet un ensemble pour déclencher volontairement la mise à feu d'au moins un organe pyrotechnique équipant un véhicule automobile, remarquable en ce qu'il comprend un calculateur conforme à ce qui précède et, connecté aux bornes d'alimentation de ce calculateur, une source de tension variable conforme à ce qui précède.

Suivant d'autres caractéristiques de cet ensemble :
- cet ensemble comprend en outre des moyens pour interdire ledit déclenchement volontaire lorsque ledit véhicule automobile se déplace,
- cet ensemble comprend en outre un interrupteur sécurisé permettant, tant qu'il est ouvert, d'interdire ledit déclenchement volontaire.

La présente invention a encore pour objet un procédé pour déclencher volontairement la mise à feu d'au moins un d'organe pyrotechnique équipant un véhicule automobile, ladite mise à feu pouvant être déclenchée par au moins un signal de sortie susceptible d'être émis par un calculateur, remarquable en ce qu'il comprend les étapes consistant :
- à faire varier la tension d'alimentation dudit calculateur selon une séquence prédéterminée,
- à identifier ladite séquence prédéterminée, et
- à provoquer l'émission dudit signal de sortie consécutivement à ladite identification.

Suivant d'autres caractéristiques de ce procédé:
- on engendre automatiquement ladite séquence prédéterminée,
- on engendre manuellement ladite séquence prédéterminée,
- on engendre ladite séquence prédéterminée en déconnectant de manière intermittente ladite batterie des bornes d'alimentation dudit calculateur,
- on engendre ladite séquence prédéterminée en code morse,
- on vérifie que ledit véhicule automobile est arrêté avant d'autoriser ledit déclenchement volontaire,
- on ferme ledit interrupteur sécurisé pour autoriser ledit déclenchement volontaire.

D'autres caractéristiques et avantages de la présente invention apparaîtront à la lecture de la description qui va suivre et à l'examen du dessin annexé, dans lequel :
- la figure 1 est un schéma d'un circuit électrique comprenant un ensemble selon l'invention, et
- la figure 2 est un organigramme indiquant le principe de fonctionnement de cet ensemble.

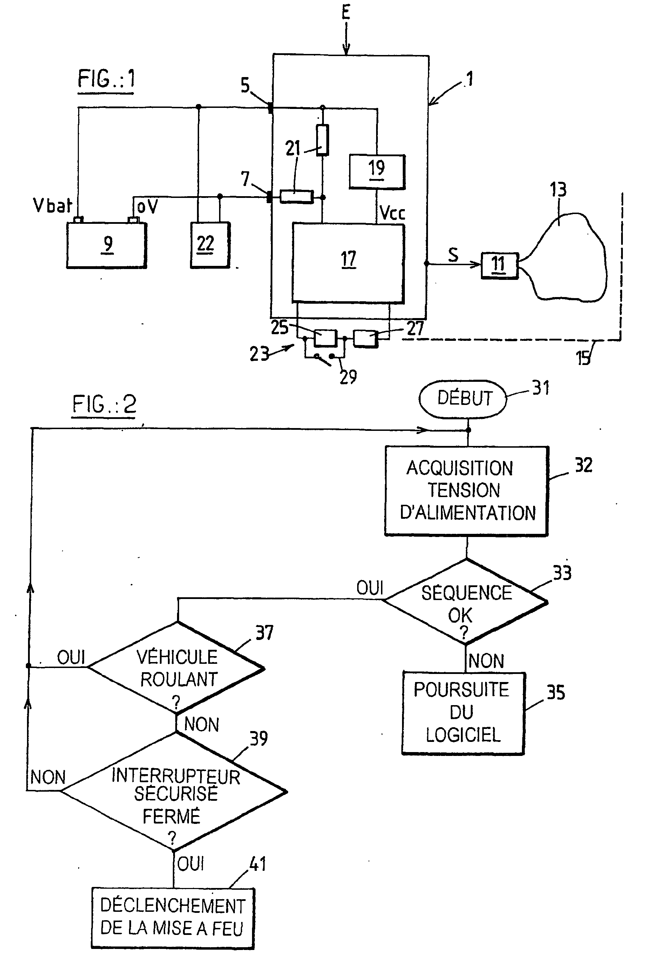

On se reporte à présent à la figure 1, sur laquelle on voit que l'ensemble selon l'invention comprend un calculateur 1.

Le calculateur 1 comprend deux bornes d'alimentation 5, 7 destinées à être reliées à une batterie 9.

Le calculateur 1 est du type susceptible d'émettre, à la réception d'au moins un signal d'entrée prédéfini E, au moins un signal de sortie S destiné à déclencher la mise à feu d'au moins un organe pyrotechnique 11 permettant par exemple de déployer un élément de sécurité du type à enveloppe gonflable 13 dans l'habitacle d'un véhicule automobile 15, voire une pluralité de tels éléments de sécurité (non représentés) éventuellement selon un ordonnancement prédéfini.

Le calculateur 1 comprend de préférence au moins une entité électronique 17 telle qu'un microprocesseur reliée aux bornes d'alimentation 5, 7 du calculateur 1 par l'intermédiaire d'un régulateur de tension 19 et d'un diviseur de tension 21.

L'entité électronique 17 est programmée de manière à pouvoir identifier une séquence d'évolution temporelle prédéterminée de la tension appliquée aux bornes d'alimentation 5, 7, et à provoquer l'émission du signal S consécutivement à cette identification de manière à déclencher la mise à feu de l'organe pyrotechnique 11.

L'ensemble selon l'invention comprend également une source de tension variable reliée aux bornes d'alimentation 5, 7 du calculateur 1.

Dans un premier mode de réalisation, cette source de tension variable peut comprendre un boîtier 22 monté en parallèle avec la batterie 9, dans lequel se trouvent un générateur de tension et des moyens pour engendrer la séquence susmentionnée. à la demande, c'est-à-dire à la suite de l'intervention d'un opérateur extérieur.

Les moyens susmentionnés peuvent comprendre une entité électronique telle qu'un microprocesseur (non représentée) programmée de manière à engendrer automatiquement ladite séquence.

En variante, les moyens susmentionnés peuvent comprendre par exemple un bouton poussoir (non représenté) permettant d'engendrer manuellement ladite séquence.

Dans un deuxième mode de réalisation (non représenté), c'est la batterie 9 elle-même qui peut former le générateur de tension de la source de tension variable, les moyens pour engendrer la séquence susmentionnée à la demande étant alors interposés entre les bornes de cette batterie et les bornes d'alimentation 5, 7.

En option, l'ensemble selon l'invention peut comprendre des moyens (non représentés) tels qu'un capteur transmettant un signal par l'intermédiaire du réseau multiplexé (non représenté) au microprocesseur 17 pour interdire le déclenchement de la mise à feu de l'organe pyrotechnique 11 lorsque le véhicule automobile 15 se déplace.

En option également, l'ensemble selon l'invention peut comprendre un interrupteur sécurisé 23 relié au microprocesseur 17 permettant, tant qu'il est ouvert, d'interdire ledit déclenchement.

Comme cela est visible sur la figure 1, l'interrupteur sécurisé 23 peut comprendre, typiquement, une première résistance 25 relativement grande (par exemple de 300 ohms) et une deuxième résistance 27 relativement petite (par exemple de 100 ohms) connectées en série, ainsi qu'un interrupteur à proprement parlé 29 monté en parallèle aux bornes de la première résistance 25.

On se réfère à présent à la figure 2, sur laquelle on a représenté un organigramme décrivant le fonctionnement du programme du microprocesseur 17.

Ce programme est initialisé en 31 lorsqu'on commence à faire varier (automatiquement ou manuellement) la tension aux bornes d'alimentation 5, 7 selon ladite séquence prédéterminée.

Ensuite, ce programme acquiert en 32 la tension aux bornes 5, 7, puis il vérifie en 33 si cette tension varie effectivement selon ladite séquence prédéterminée.

Si tel n'est pas le cas, ce programme se poursuit en 35 sans provoquer le déclenchement de la mise à feu de l'organe pyrotechnique 11.

Si tel est le cas, ce programme vérifie en 37 à partir des informations envoyées par le capteur susmentionné si le véhicule 15 se déplace.

Si tel est le cas, ce programme retourne à l'étape 31.

Si tel n'est pas le cas, ce programme vérifie en 39 si l'interrupteur sécurisé 23 est fermé.

Si tel n'est pas le cas, ce programme retourne à l'étape 31.

Si tel est le cas, ce programme provoque en 41 l'émission du signal de sortie S permettant de déclencher la mise à feu de l'organe pyrotechnique 11.

Dans le deuxième mode de réalisation susmentionné, on peut engendrer ladite séquence prédéterminée en déconnectant de manière intermittente la batterie 9 des bornes d'alimentation 5, 7 du calculateur 1.

Selon une variante possible, cette séquence prédéterminée peut être engendrée en code morse.

Comme on peut le comprendre à présent, le programme du microprocesseur 17, qui est en sommeil en temps normal, se réveille pour provoquer le déclenchement de la mise à feu de l'organe pyrotechnique 11 lorsque la tension aux bornes d'alimentation 5, 7 varie d'une manière prédéterminée.

L'ensemble selon l'invention permet donc de s'affranchir de tout outil complexe du type permettant d'engendrer un signal analogue au signal d'entrée prédéfini E que reçoit le calculateur 1 en cas d'accident, de simplifier au maximum la conception de ce calculateur, et d'éviter tout branchement compliqué sur un connecteur situé sur ce calculateur. -

Le capteur susmentionné permettant de détecter si le véhicule 15 est en déplacement et l'interrupteur sécurisé 23 forment des moyens matériels de sécurité permettant de prévenir tout risque de déclenchement intempestif de la mise à feu de l'organe 11 par les moyens logiciels exposés ci-dessus.

Bien entendu, la présente invention n'est pas limitée au mode de réalisation décrit et représenté, fourni à titre d'exemple illustratif et non limitatif.

## Revendications

1. Calculateur (1) susceptible d'émettre, à la réception d'au moins un signal d'entrée (E) prédéfini, au moins un signal de sortie (S) destiné à déclencher la mise à feu d'au moins un organe pyrotechnique (11) équipant un véhicule automobile (15), comprenant des bornes (5, 7) destinées à recevoir une tension d'alimentation, **caractérisé en ce qu'**il comprend en outre des moyens (17) susceptibles d'identifier une séquence d'évolution temporelle prédéterminée de ladite tension d'alimentation, et de provoquer l'émission dudit signal de sortie (S) consécutivement à ladite identification.

2. Calculateur (1) selon la revendication 1, **caractérisé en ce que** ledit signal de sortie (S) est adapté pour déclencher la mise à feu d'une pluralité d'organes pyrotechniques (11).

3. Calculateur (1) selon la revendication 2, **caractérisé en ce que** ledit signal de sortie (S) est adapté pour déclencher ladite mise à feu selon un ordonnancement prédéfini.

4. Calculateur (1) selon l'une quelconque des revendications 1 à 3, **caractérisé en ce que** lesdits moyens (17) comprennent au moins une unité électronique telle qu'un microprocesseur (17) programmée de manière à provoquer l'émission dudit signal de sortie (S) après avoir identifié ladite séquence.

5. Calculateur (1) selon la revendication 4, **caractérisé en ce que** ledit microprocesseur (17) est relié auxdites bornes d'alimentation (5, 7) par l'intermédiaire d'un régulateur de tension (19) et d'un diviseur de tension (21).

6. Source de tension variable (3) destinée à être branchée aux bornes d'alimentation d'un calculateur (1) conforme à l'une quelconque des revendications 1 à 5, **caractérisée en ce qu'**elle comprend un générateur de tension et des moyens pour engendrer ladite séquence prédéterminée à la demande à partir de la tension fournie par ledit générateur.

7. Source de tension variable (3) selon la revendication 6, **caractérisée en ce que** lesdits moyens comprennent une unité électronique telle qu'un microprocesseur programmée de manière à engendrer automatiquement ladite séquence prédéterminée.

8. Source de tension variable (3) selon la revendication 7, **caractérisée en ce que** lesdits moyens sont adaptés pour engendrer manuellement ladite séquence prédéterminée.

9. Source de tension variable (3) selon l'une quelconque des revendications 6 à 8, **caractérisée en ce que** ledit générateur de tension est distinct d'une batterie (9) de véhicule automobile (15).

10. Source de tension variable (3) selon l'une quelconque des revendications 6 à 8, **caractérisée en ce que** ledit générateur de tension comprend une batterie (9) de véhicule automobile (15).

11. Ensemble pour déclencher volontairement la mise à feu d'au moins un organe pyrotechnique (11) équipant un véhicule automobile (15), **caractérisé en ce qu'**il comprend un calculateur (1) conforme à l'une quelconque des revendications 1 à 5 et, connecté aux bornes d'alimentation (5, 7) de ce calculateur (1), une source de tension variable (3) conforme à l'une quelconque des revendications 6 à 10.

12. Ensemble selon la revendication 11, **caractérisé en ce qu'**il comprend en outre des moyens pour interdire ledit déclenchement volontaire lorsque ledit véhicule automobile se déplace.

13. Ensemble selon l'une des revendications 11 ou 12, **caractérisé en ce qu'**il comprend en outre un interrupteur sécurisé (23) permettant, tant qu'il est ouvert, d'interdire ledit déclenchement volontaire.

14. Véhicule automobile (15), **caractérisé en ce qu'**il est équipé d'un ensemble conforme à l'une quelconque des revendications 11 à 13.

15. Procédé pour déclencher volontairement la mise à feu d'au moins un d'organe pyrotechnique (11) équipant un véhicule automobile (15), ladite mise à feu pouvant être déclenchée par au moins un signal de sortie (S) susceptible d'être émis par un calculateur (1), **caractérisé en ce qu'**il comprend les étapes consistant :
- à faire varier la tension d'alimentation dudit calculateur (1) selon une séquence prédéterminée,
- à identifier ladite séquence prédéterminée, et
- à provoquer l'émission dudit signal de sortie (S) consécutivement à ladite identification.

16. Procédé selon la revendication 15, **caractérisé en ce qu'**on engendre automatiquement ladite séquence prédéterminée.

17. Procédé selon la revendication 15, **caractérisé en ce qu'**on engendre manuellement ladite séquence prédéterminée.

18. Procédé selon la revendication 17 appliqué à un ensemble conforme à la revendication 11 comprenant une source de tension (3) conforme à la revendication 10, **caractérisé en ce qu'**on engendre ladite séquence prédéterminée en déconnectant de manière intermittente ladite batterie (9) des bornes d'alimentation (5, 7) dudit calculateur (1).

19. Procédé selon l'une des revendications 17 ou 18, **caractérisé en ce qu'**on engendre ladite séquence prédéterminée en code morse.

20. Procédé selon l'une quelconque des revendications 15 à 19 appliqué à un ensemble conforme à la revendication 11, **caractérisé en ce qu'**on vérifie que ledit véhicule automobile (15) est arrêté avant d'autoriser ledit déclenchement volontaire.

21. Procédé selon l'une quelconque des revendications 15 à 20 appliqué à un ensemble conforme à la revendication 13, **caractérisé en ce qu'**on ferme ledit interrupteur sécurisé (23) pour autoriser ledit déclenchement volontaire.

## Claims

1. A computer (1) capable upon the reception of at least one predefined input signal (E) of emitting at least one output signal (S) intended to trigger the firing of at least one pyrotechnic unit (11) equipping a motor vehicle (15), comprising terminals (5, 7) intended to receive a supply voltage, **characterised in that** it further comprises means (17) capable of identifying a predetermined time variation sequence in respect of said supply voltage and causing emission of said output signal (S) following upon said identification.

2. A computer (1) according to claim 1 **characterised in that** said output signal (S) is adapted to trigger the firing of a plurality of pyrotechnic units (11).

3. A computer (1) according to claim 2 **characterised in that** said output signal (S) is adapted to trigger said firing in accordance with a predefined timing.

4. A computer (1) according to any one of claims 1 to 3 **characterised in that** said means (17) comprise at least one electronic unit such as a microprocessor (17) so programmed as to cause the emission of said output signal (S) after having identified said sequence.

5. A computer (1) according to claim 4 **characterised in that** said microprocessor (17) is connected to said supply terminals (5,7) by way of a voltage regulator (19) and a voltage divider (21).

6. A variable voltage source (3) intended to be connected to the supply terminals of a computer (1) according to any one of claims 1 to 5 **characterised in that** it comprises a voltage generator and means for producing said predetermined sequence on demand from the voltage produced by said generator.

7. A variable voltage source (3) **characterised in that** said means comprise an electronic unit such as a microprocessor so programmed as to automatically produce said predetermined sequence.

8. A variable voltage source (3) according to claim 7 **characterised in that** said means are adapted to manually produce said predetermined sequence.

9. A variable voltage source (3) according to any one of claims 6 to 8 **characterised in that** said voltage generator is separate from a motor vehicle (15) battery (9).

10. A variable voltage source (3) according to any one of claims 6 to 8 **characterised in that** said voltage generator comprises a motor vehicle (15) battery (9).

11. An assembly for voluntarily triggering the firing of at least one pyrotechnic unit (11) equipping a motor vehicle (15) **characterised in that** it comprises a computer (1) according to any one of claims 1 to 5 and connected to the supply terminals (5, 7) of said calculator (1) a variable voltage source (3) according to any one of claims 6 to 10.

12. An assembly according to claim 11 **characterised in that** it further comprises means for preventing said voluntary triggering when said motor vehicle is moving.

13. An assembly according to one of claims 11 and 12 **characterised in that** it further comprises a security-mode switch (23) which as long as it open makes it possible to prevent said voluntary triggering.

14. A motor vehicle (15) **characterised in that** it is fitted with an assembly according to any one of claims 11 to 13.

15. A process for voluntarily triggering firing of at least one pyrotechnic unit (11) equipping a motor vehicle (15), which firing can be triggered by at least one output signal (S) capable of being emitted by a computer (1), **characterised in that** it comprises the following steps:
- varying the supply voltage of said computer (1) according to a predetermined sequence,
- identifying said predetermined sequence, and
- causing the emission of said output signal (S) following upon said identification.

16. A process according to claim 15 **characterised in that** said predetermined sequence is produced automatically.

17. A process according to claim 15 **characterised in that** said predetermined sequence is produced manually.

18. A process according to claim 17 applied to an assembly according to claim 11 comprising a voltage source (3) according to claim 10 **characterised in that** said predetermined sequence is produced by intermittently disconnecting said battery (9) from the supply terminals (5, 7) of said computer (1).

19. A process according to one of claims 17 and 18 **characterised in that** said predetermined sequence is produced in morse code.

20. A process according to any one of claims 15 to 19 applied to an assembly according to claim 11 **characterised in that** it is verified that said motor vehicle (15) is stopped before said voluntary triggering is authorised.

21. A process according to any one of claims 15 to 20 applied to an assembly according to claim 13 **characterised in that** said security-mode switch (23) is closed to authorise said voluntary triggering.

## Patentansprüche

1. Rechner (1), welcher fähig ist, beim Empfang von mindestens einem vorherbestimmten Eingangssignal (E), mindestens ein Ausgangssignal (S) auszusenden, welches dafür bestimmt ist, die Zündung von mindestens einem pyrotechnischen Bauteil (11) auszulösen, welches ein Kraftfahrzeug (15) ausstattet, aufweisend Anschlüsse (5, 7), die dafür bestimmt sind, eine Versorgungsspannung zu empfangen, **dadurch gekennzeichnet, dass** er des Weiteren Mittel (17) aufweist, die fähig sind, eine vorherbestimmte, zeitliche Enrwicklungssequenz der Versorgungsspannung zu identifizieren, und das Aussenden des Ausgangssignals (S) nachfolgend auf die Identifikation hervorzurufen.

2. Rechner (1) nach Anspruch 1, **dadurch gekennzeichnet, dass** das Ausgangssignal (S) angepasst ist, um die Zündung einer Mehrzahl von pyrotechnischen Bauteilen (11) auszulösen.

3. Rechner (1) nach Anspruch 2, **dadurch gekennzeichnet, dass** das Ausgangssignal (S) angepasst ist, um die Zündung gemäß einer vorherbestimmten Reihenfolge auszulösen.

4. Rechner (1) nach irgendeinem der Ansprüche 1 bis 3, **dadurch gekennzeichnet, dass** die Mittel (17) mindestens eine elektronische Einheit, wie z.B. einen Mikroprozessor (17), aufweisen, die auf solch eine Art und Weise programmiert ist, um die Aussendung des Ausgangssignals (S) hervorzurufen, nachdem die Sequenz identifiziert worden ist.

5. Rechner (1) nach Anspruch 4, **dadurch gekennzeichnet, dass** der Mikroprozessor (17) mit den Versorgungsanschlüssen (5, 7) über einen Spannungsregler (19) und einen Spannungsteiler (21) verbunden ist.

6. Variable Spannungsquelle (3), die dafür bestimmt ist, an Versorgungsanschlüssen eines Rechners (1) entsprechend irgendeinem der Ansprüche 1 bis 5 angeschlossen zu werden, **dadurch gekennzeichnet, dass** sie einen Spannungsgenerator und Mittel zum Erzeugen der vorherbestimmten Sequenz aufweist, auf Anforderung, ausgehend von der durch den Generator gelieferten Spannung.

7. Variable Spannungsquelle (3) nach Anspruch 6, **dadurch gekennzeichnet, dass** die Mittel eine elektronische Einheit, wie z.B. einen Mikroprozessor, aufweisen, der auf solch eine Art und Weise programmiert ist, um automatisch die vorherbestimmte Sequenz zu erzeugen.

8. Variable Spannungsquelle (3) nach Anspruch 7, **dadurch gekennzeichnet, dass** die Mittel angepasst sind, um die vorherbestimmte Sequenz manuell zu erzeugen.

9. Variable Spannungsquelle (3) nach irgendeinem der Ansprüche 6 bis 8, **dadurch gekennzeichnet, dass** der Spannungsgenerator verschieden von einer Batterie (9) des Kraftfahrzeugs (15) ist.

10. Variable Spannungsquelle (3) nach irgendeinem der Ansprüche 6 bis 8, **dadurch gekennzeichnet, dass** der Spannungsgenerator eine Batterie (9) des Kraftfahrzeugs (15) aufweist.

11. Gesamtheit zum absichtlichen Auslösen der Zündung von mindestens einem pyrotechnischen Bauteil (11), welches ein Kraftfahrzeug (15) ausstattet, **dadurch gekennzeichnet, dass** sie einen Rechner (1) entsprechend irgendeinem der Ansprüche 1 bis 5 und eine variable Spannungsquelle (3) entsprechend irgendeinem der Ansprüche 6 bis 10 aufweist, welche mit den Versorgungsanschlüssen. (5, 7) dieses Rechners (1) verbunden ist.

12. Gesamtheit nach Anspruch 11, **dadurch gekennzeichnet, dass** sie des Weiteren Mittel zum Unterbinden der absichtlichen Auslösung aufweist, wenn das Kraftfahrzeug in Bewegung ist.

13. Gesamtheit nach irgendeinem der Ansprüche 11 oder 12, **dadurch gekennzeichnet, dass** sie des Weiteren einen gesicherten Schalter (23) aufweist, weicher es erlaubt, wenn er offen ist, die absichtliche Auslösung zu unterbinden.

14. Kraftfahrzeug (15), **dadurch gekennzeichnet, dass** es mit einer Gesamtheit gemäß irgendeinem der Ansprüche 11 bis 13 ausgestattet ist.

15. Verfahren zum absichtlichen Auslösen der Zündung von mindestens einem pyrotechnischen Bauteil (11), welches ein Kraftfahrzeug (15) ausstattet, wobei die Zündung über mindestens ein Ausgangssignal (S) ausgelöst werden kann, welches durch einen Rechner (1) ausgesendet werden kann, **dadurch gekennzeichnet, dass** es die Schritte aufweist bestehend aus:
- Variierenlassen der Versorgungsspannung des Rechners (1) gemäß einer vorherbestimmten Sequenz;
- Identifizieren der vorherbestimmten Sequenz, und
- Hervorrufen der Aussendung des Ausgangssignals (S) nachfolgend auf die Identifikation.

16. Verfahren nach Anspruch 15, **dadurch gekennzeichnet, dass** man die vorherbestimmte Sequenz automatisch erzeugt.

17. Verfahren nach Anspruch 15, **dadurch gekennzeichnet, dass** man die vorherbestimmte Sequenz manuell erzeugt.

18. Verfahren nach Anspruch 17, angewendet auf eine Gesamtheit entsprechend Anspruch 11, aufweisend eine Spannungsquelle (3) entsprechend Anspruch 10, **dadurch gekennzeichnet, dass** man die vorherbestimmte Sequenz durch zeitweiliges Abhängen der Batterie (9) von den Versorgungsanschlüssen (5, 7) des Rechners (1) erzeugt.

19. Verfahren nach einem der Ansprüche 17 oder 18, **dadurch gekennzeichnet, dass** man die vorherbestimmte Sequenz im Morsecode erzeugt.

20. Verfahren nach irgendeinem der Ansprüche 15 bis 19, angewendet auf eine Gesamtheit gemäß Anspruch 11, **dadurch gekennzeichnet, dass** man überprüft, ob das Kraftfahrzeug (15) angehalten ist, bevor man die absichtliche Auslösung erlaubt.

21. Verfahren nach irgendeinem der Ansprüche 15 bis 20, angewendet auf eine Gesamtheit gemäß Anspruch 13, **dadurch gekennzeichnet, dass** man den gesicherten Schalter (23) schließt, um die absichtliche Auslösung zu erlauben.
